# EUROPÄISCHE PATENTSCHRIFT

(11) **EP 1 062 123 B1**
(45) Veröffentlichungstag und Bekanntmachung des Hinweises auf die Patenterteilung: **23.04.2003**
(21) Anmeldenummer: 99964459.4
(22) Anmeldetag: 27.12.1999
(51) Int. Cl.: B60R 11/00, F16B 5/00

(54) **VORRICHTUNG ZUM BEFESTIGEN EINES ERSTEN TEILS AN EINEM FESTSTEHENDEN ZWEITEN TEIL**
DEVICE FOR FIXING A FIRST PART TO A FIXED SECOND PART
DISPOSITIF PERMETTANT DE FIXER UN PREMIER ELEMENT A UN DEUXIEME ELEMENT FIXE

(30) Priorität: 07.01.1999 DE 19900267
(43) Veröffentlichungstag der Anmeldung: 27.12.2000
(73) Patentinhaber: Hella KG Hueck & Co., 59552 Lippstadt (DE); Airbus Deutschland GmbH, 21129 Hamburg (DE); Dräger Aerospace GmbH, 23558 Lübeck (DE)
(72) Erfinder: HESSLING, Andre, D-59457 Werl (DE); JANSA, Bruno, D-21109 Hamburg (DE); RIEDEL, Christian, D-21640 Bliedersdorf (DE); MEISSNER, Claus-Dieter, D-21614 Buxtehude (DE); THOMETSCHEK, Roderich, D-23617 Stockeisdorf (DE)
(74) Vertreter: Hilleringmann, Jochen, Dipl.-Ing.
(86) Internationale Anmeldenummer: DE9904100
(87) Internationale Veröffentlichungsnummer: WO00040436

(56) Entgegenhaltungen:
- EP-A- 0 570 275
- DE-A- 4 224 148
- DE-A- 19 619 087
- DE-C- 19 703 520
- US-A- 3 993 278

## Beschreibung

Die Erfindung betrifft eine Vorrichtung zum Befestigen eines ersten Teils an einem feststehenden zweiten Teil, insbesondere an einem Teil eines Fahrzeugs, mit einem Befestigungselement, das mit dem ersten Teil verbindbar ist und das mindestens ein unverlierbar angeordnetes Feststellelement aufweist, das zum einen in eine das erste Teil mit dem zweiten Teil verbindende Verriegelungsposition und zum anderen in eine das erste Teil vom zweiten Teil lösende Entriegelungssposition bringbar ist.

Aus DE-A- 197 30 269 ist eine Vorrichtung zum Befestigen eines ersten Teils an einem feststehenden zweiten Teil bekannt, bei der ein einstückiges Befestigungselement vorgesehen ist, das mit dem ersten Teil verbindbar ist. Dem Befestigungselement ist ein unverlierbar an demselben befestigtes Feststellelement zugeordnet, mittels dessen das Befestigungselement zusammen mit dem ersten Teil lösbar an dem zweiten Teil montierbar ist. Das Befestigungselement weist einen Haltesteg auf, der mittels einer Steckklammer klemmend an einem abragenden Steg des ersten Teils gehaltert ist. Vor der Arretierung des ersten Teils an dem zweiten Teil ist es erwünscht, eine Zugänglichkeit der Rückseite des ersten Teils zu gewährleisten, damit die Installation der Anschlüsse der an dem ersten Teil befestigten Geräte, insbesondere von Luftduschen bzw. Leseleuchten, vorgenommen werden kann. Zu diesem Zweck ist auf der zu dem Befestigungselement gegenüberliegenden Seite des ersten Teils ein klammerartiger Haltearm vorgesehen, der auf den Rand des zweiten Teils auflegbar ist. Der Rand des zweiten Teils bildet somit eine Auflagefläche für den Haltesteg des ersten Teils, die eine zur Erstreckung des zweiten Teils senkrechte Öffnungsstellung des ersten Teils ermöglicht. Nachteilig an der bekannten Vorrichtung ist jedoch, daß infolge des losen Sitzes des Haltesteges des ersten Teils an dem Rand des zweiten Teils während der Installationsarbeiten ein unerwünschtes Lösen des ersten von dem zweiten Teil auftreten kann. Darüber hinaus kann das erste Teil nur auf einer Seite des zweiten Teils montiert und nur in eine einzige Richtung verschwenkt werden zur Befestigung an dem zweiten Teil.

Aus DE-A-42 24 148 ist eine gattungsgemässe Befestigungsvorrichtung der vorstehend genannten Art bekannt, bei der zusätzlich vorgesehen ist, dass das Befestigungselement mindestens ein das Feststellelement tragendes Halteteil aufweist, das um eine Schwenkachse schwenkbar mit dem ersten Teil gekoppelt ist.

Aufgabe der vorliegenden Erfindung ist es daher, eine Vorrichtung zum Befestigen eines ersten Teils an einem feststehenden zweiten Teil derart weiterzubilden, dass das erste Teil zum einen sicher in einer vorgegebenen Öffnungsstellung gehaltert ist und zum anderen einfach und sicher an dem zweiten Teil befestigt werden kann.

Zur Lösung dieser Aufgabe schlägt die Erfindung eine Vorrichtung mit den Merkmalen des Patentanspruchs 1 vor; individuelle Ausgestaltungen der Erfindung sind in den Unteransprüchen angegeben.

Nach der Erfindung ist das Halteteil an dem Rand des zweiten Teils mittels einer durch eine Führungsbohrung des Halteteils geführten Schraube in Eingriff gebracht. Ein an dem freien Ende der Schraube angebrachter Endanschlag bewirkt, dass die Schraube verliersicher an dem Halteteil gehalten ist. An einer zu dem zweiten Teil gekehrten Oberseite des Halteteils ragen mindestens zwei voneinander beabstandete Anschläge unterschiedlicher Höhe ab. Im Zusammenwirken mit dem Endanschlag bewirken die Anschläge einen einfachen Ver- und Entriegelungsmechanismus, der eine in Schraubeingriff mit der Schraube befindlichen Festlegmutter gezielt in eine Verriegelungs- bzw. Entriegelungsposition verbringt. Durch Verdrehen der Schraube in einer Richtung, beispielsweise durch Rechtsdrehung derselben, kann die Festlegmutter aus einer definierten Entriegelungsposition in eine definierte Verriegelungsposition verdreht werden. Durch Verdrehen der Schraube in die umgekehrte Richtung kann die Festlegmutter zurück in die Entriegelungsposition verbracht werden.

Der besondere Vorteil der Erfindung ist darin begründet, dass das Befestigungselement zum einen eine lösbare Fügeverbindung und zum anderen eine definierte Verschwenkbarkeit des ersten Teils zu dem zweiten Teil ermöglicht. Nach sicherer Arretierung des ersten Teils im Bereich eines Randes des zweiten Teils mittels des Feststellelementes kann das erste Teil infolge seines Eigengewichtes eine Öffnungsstellung einnehmen, in der sich das erste Teil im wesentlichen in vertikaler Richtung erstreckt, so dass die an dem ersten Teil angeordneten Geräte an die sich in der Öffnung des zweiten Teils befindlichen Versorgungsmittel angeschlossen werden können. Vorteilhaft sind jeweils an gegenüberliegenden Randseiten des ersten Teils Befestigungselemente angeordnet, so dass das erste Teil seitenunabhängig in eine Öffnungsstellung verbracht werden kann. Die Handhabbarkeit beim Einbau bzw. Wechsel des ersten Teils wird hierdurch vereinfacht. Ferner ermöglicht die erfindungsgemäße Vorrichtung, dass das Verbringen des ersten Teils aus der Öffnungsstellung in die Schließstellung mit dem Betätigen des Feststellelementes an der gegenüberliegenden Seite beendet wird, so dass eine schnelle und sichere Montage des ersten Teils an dem zweiten Teil ermöglicht wird.

Nach einer vorteilhaften Weiterbildung der Erfindung wird die Verschwenkbarkeit zwischen einem fest mit dem zweiten Teil verbundenen Halteteil und dem ersten Teil durch ein scharnierartiges Gelenk gebildet, das sich im Randbereich des ersten Teils erstreckt. Hierdurch wird eine einfache Verschwenkbarkeit ermöglicht, die einen großen Öffnungsquerschnitt freilegt bzw. eine vollständige Zugänglichkeit der Rückseite des ersten Teils ermöglicht.

Nach einer Ausgestaltung der Erfindung wird ein unerwünschtes Zurückdrehen der Festlegmutter aus einer Teilverriegelungsposition, in der das erste Teil lose an dem zweiten Teil befestigt ist, in die Entriegelungsposition durch einen auf die Steigung der Schraube abgestimmten Anschlag verhindert, der an dem Halteteil des Befestigungselements angeordnet ist.

Nach einer Weiterbildung der Erfindung ist das Befestigungselement quaderförmig ausgebildet und weist ein in einer Randausnehmung des ersten Teils eingefaßtes Unterteil auf. Vorzugsweise ist das Unterteil durch Einrasten in der Randausnehmung sicher gehalten. In einer alternativen Ausführungsform kann das Unterteil auch einstückig mit dem ersten Teil verbunden sein.

Nach einer bevorzugten Ausführungsform der Erfindung ragt von dem Haiteteil ein Haltearm in Richtung des angelenkten ersten Teils ab, wobei das freie Ende des Haltearms an das erste Teil angelenkt ist. Vorteilhaft ist hierdurch das zweite Teil beabstandet zu dem Rand des ersten Teils angeordnet, so daß Raum für eine ungehinderte Verschwenkbarkeit des ersten Teils geschaffen wird. Insbesondere kann hierdurch das Halteteil oberhalb eines Spaltes zwischen benachbarten ersten Teilen angeordnet sein, so daß keine zusätzliche Bohrung in dem ersten Teil für das Versenken einer Schraube vorgesehen sein muß.

Nach einer Weiterbildung der Erfindung ist der Haltearm bogenförmig ausgebildet, so daß eine ausreichende Steifigkeit bzw. Stabilität des Halteteils gewährleistet ist.

Nach einer Weiterbildung der Erfindung weist das Halteteil in einem mittleren Abschnitt eine Führungsbohrung zur Führung der Schraube und in angrenzenden äußeren Abschnitten zwei parallel verlaufende Haltearme auf. Durch die beabstandete Anordnung der Haltearme wird ein Zwischenraum gebildet, so daß eine ungehinderte Zuführung eines Betätigungselementes, beispielsweise Schraubendrehers, zur Betätigung der Schraube ermöglicht wird.

Nach einer Weiterbildung der Erfindung ist das Halteteil zweistückig ausgebildet, wobei ein Einsetzteil in einem Aufnahmeteil rastend gehaltert ist. Vorteilhaft ermöglicht die zweistückige Ausbildung, daß bei fehlerhaften Anbringen, des Halteteils an dem zweiten Teil beispielsweise unter Zerstörung des Aufnahmeteils bzw. der Schraube das mit dem ersten Teil verbundene Einsetzteil gleichwohl weiterverwendet werden kann. Durch die lediglich rastende Verbindung ist eine einfache Austauschbarkeit des defekten Aufnahmeteils gegeben. Zum einen läßt sich die Montagezeit verkürzen und zum anderen Material einsparen.

Nach einer Weiterbildung der Erfindung ist das Einsetzteil in dem Aufnahmeteil mit Spiel in Querrichtung eingefaßt, so daß ein Toleranzausgleich in Querrichtung gegeben ist. Dies ermöglicht zum einen eine spannungsfreie Montage des ersten Teils an das zweite Teil. Zum anderen wird auch in der vorgesehenen Stellung des ersten Teils während der Betriebszeit des Fahrzeuges, insbesondere des Flugzeuges, einem Spannungsaufbau entgegengewirkt.

Nach einer Weiterbildung der Erfindung sind den gegenüberliegenden Randseiten des ersten Teils unterschiedlich profilierte Profilschienen als zweite Teile zugeordnet, wobei eine erste Profilschiene eine Verschiebung des Halteteils bezüglich der Profilschiene in Querrichtung um eine vorgegebene Länge zuläßt, während die andere Profilschiene Festlegstege aufweist, die einen paßgenauen Sitz des Halteteils zu der Profilschiene in Querrichtung ermöglicht. Somit ist eine Randseite des ersten Teils fest mit der ihr zugeordneten Profilschiene verbunden. Da diese Profilschiene über das Halteteil gelenkig mit dem ersten Teil verbunden ist, kann in der Schließstellung des ersten Teils auch in diesem Bereich ein Toleranzausgleich in Querrichtung erfolgen. Vorteilhaft sind die an den Randseiten des ersten Teils angelenkten Halteteile gleichförmig ausgebildet, was sich vereinfachend auf die Montage auswirkt.

Zwei Ausführungsbeispiele der Erfindung wird nachfolgend anhand der Zeichnungen näher erläutert.

Es zeigen:
- Figur 1: eine perspektivische Darstellung eines ersten Teils mit jeweils an gegenüberliegenden Seiten angeordneten Befestigungselementen,
- Figur 2: eine Rückansicht des ersten Teils,
- Figur 3: einen Teilschnitt durch das erste Teil entlang der Linie III-III gemäß Figur 2,
- Figur 4: eine perspektivische Darstellung des Befestigungselements in einer Schließstellung, wobei sich ein Feststellelement in einer Entriegelungsposition befindet,
- Figur 5: eine Ansicht des Befestigungselementes von oben in einer Schließstellung, wobei sich das Feststellelement in der Entriegelungsposition befindet,
- Figur 6: einen Querschnitt durch das Befestigungselement entlang der Linie VI-VI in Figur 5,
- Figur 7: einen Querschnitt durch das Befestigungselement entsprechend Figur 6 in einer Öffnungsstellung des Befestigungselements,
- Figur 8: eine Ansicht des Befestigungselements von oben, wobei sich das Feststellelement in einer Verriegelungsposition befindet,
- Figur 9: einen Querschnitt durch das Befestigungselement entlang der Linie IX-IX in Figur 8, wobei sich das Befestigungselement in der Schließstellung befindet,
- Figur 10: einen Querschnitt durch das Befestigungselement in einer Öffnungsstellung desselben, wobei eine Schraube des Feststellelements axial bewegt worden ist zum Verbringen des Feststellelements aus der Entriegelungsposition in die Verriegelungsposition,
- Figur 11: eine perspektivische Darstellung eines Befestigungselementes nach einem zweiten Ausführungsbeispiel,
- Figur 12: eine Draufsicht auf das Befestigungselement gemäß Figur 11,
- Figur 13: einen Querschnitt durch das Befestigungselement entlang der Linie XIII-XIII gemäß Figur 12,
- Figur 14: einen Querschnitt durch ein an gegenüberliegenden Randseiten mit einem zweiten Teil verbundenen ersten Teil, wobei den Randseiten jeweils ein Befestigungselement zugeordnet sind, das sich in einer Verriegelungsposition befindet,
- Figur 15: eine Ansicht des an das erste Teil angelenkten Befestigungselementes in Axialrichtung mit einem Einsetzteil, das in Querrichtung verschwenkt zu einem Aufnahmeteil des Befestigungselementes in zwei Positionen dargestellt ist,
- Figur 16: eine perspektivische Darstellung des Einsetzteils von oben gesehen,
- Figur 17: eine perspektivische Darstellung des Aufnahmeteils von oben und
- Figur 18: eine perspektivische Darstellung des Aufnahmeteils von unten.

Die im folgenden beschriebene Vorrichtung zum Befestigen von Teilen kann beispielsweise bei Flugzeugen eingesetzt werden, wobei ein Flugzeugpaneel an einem feststehenden Trägerteil arretiert wird. Ferner kann die erfindungsgemäße Vorrichtung zum Befestigen von Paneelen in Schienenfahrzeugen, insbesondere Bussen, eingesetzt werden.

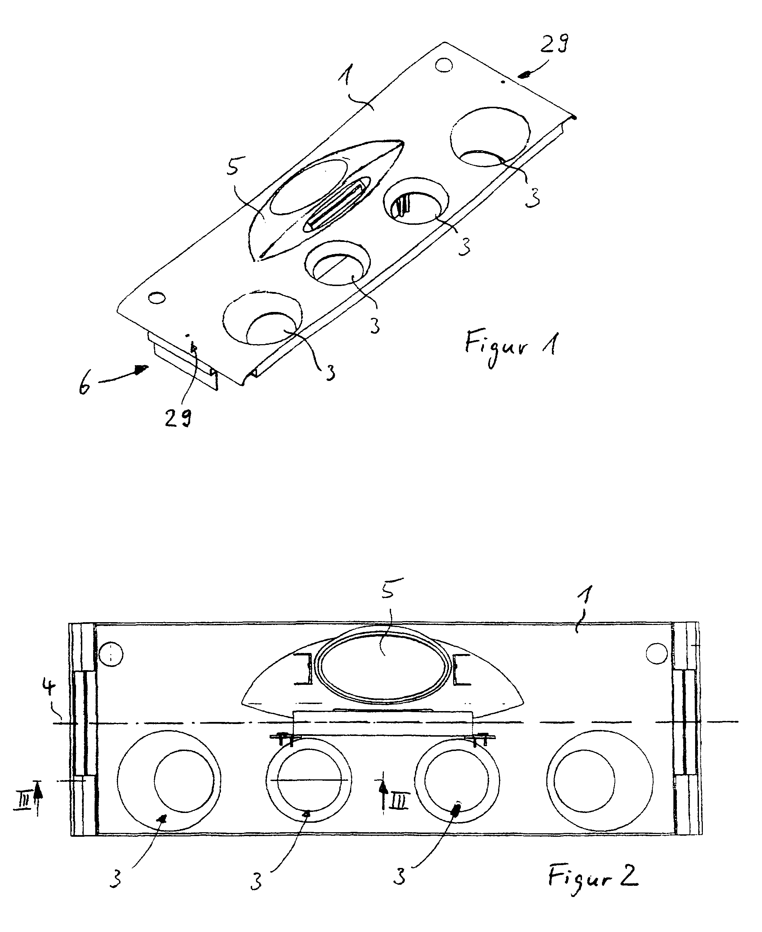

In Figur 1 ist ein Flugzeugpaneel als erstes Teil 1 dargestellt, das oberhalb der Sitzreihen an einem Trägerteil als zweites Teils 2 befestigt wird. Die vorzugsweise nebeneinander angeordneten Paneele bilden eine Deckenwandung des Flugzeuginnenraumes.

Das in Figur 1 dargestellte erste Teil 1 ist als Kunststoffteil hergestellt und weist mehrere Leseleuchtenöffnungen 3 auf, in die jeweils nicht dargestellte Leseleuchten eingesetzt werden können. Alternativ können auch eine oder mehrere dieser Öffnungen zum Einsatz einer Luftdusche verwandt werden. Die Leseleuchtenöffnungen 3 erstrecken sich hintereinander auf einer Seite einer Längsmittelebene 4 des ersten Teils 1. Auf der anderen Seite der Längsmittelebene 4 ist eine Ausnehmung 5 für den Einsatz eines Lautsprechers angeordnet. Das erste Teil 1 wird jeweils an den Schmalseiten mittels eines Befestigungselementes 6 an dem zweiten Teil 2 befestigt. Zu diesem Zweck sind Öffnungen 29 in dem ersten Teil 1 vorgesehen, die eine Zugänglichkeit zu dem Befestigungselement 6 ermöglichen.

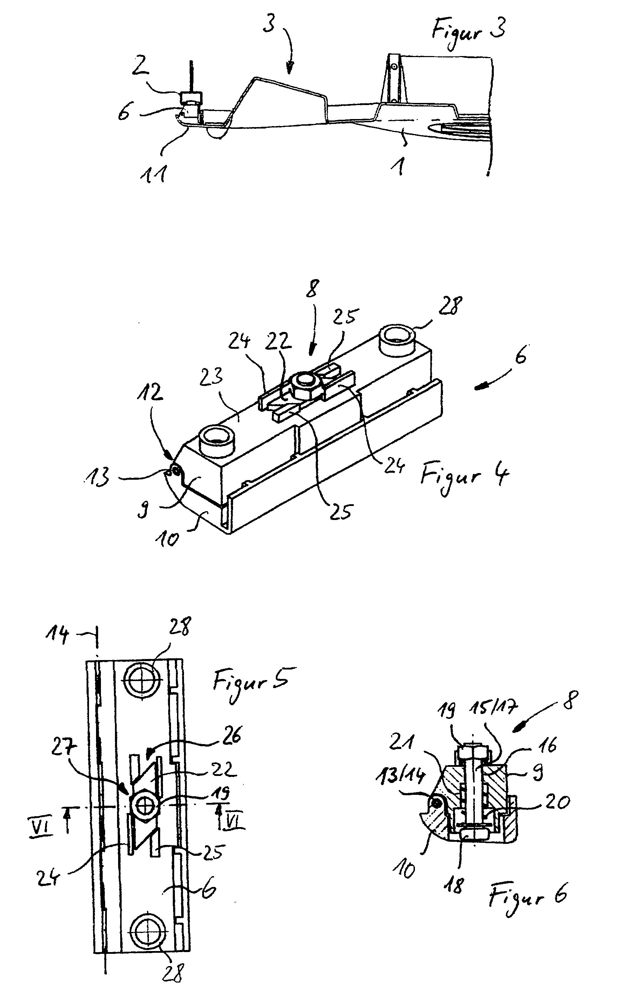

Das zweite Teil 2 ist als c-förmiges Profil ausgebildet und weist einen horizontal verlaufenden Schlitz 7 auf, der nach unten gerichtet ist. Figur 3 zeigt das Befestigungselement 6 in einer Schließstellung, wobei es mittels eines in Verriegelungsposition befindlichen Feststellelementes 8 an dem zweiten Teil 2 arretiert ist.

Wie aus den Figuren 4 bis 6 deutlich wird, ist das Befestigungselement 6 quaderförmig ausgebildet und weist ein dem zweiten Teil 2 zugewandtes Oberteil 9 und ein dem zweiten Teil 2 abgewandtes Unterteil 10 auf, die verschwenkbar zueinander angeordnet sind. Die Längserstreckung des Befestigungselementes 6 ist parallel zur Längserstreckung des c-förmigen Profils 2. Das Unterteil 10 ist in einer rinnenförmigen Aufnahme 11 des ersten Teils 1 rastend eingesetzt, bevor die Montage des ersten Teils 1 an dem zweiten Teil 2 erfolgt. Alternativ kann das Unterteil 10 auch einstückig mit dem ersten Teil 1 ausgebildet sein.

Zur Verschwenkbarkeit des Unterteils 10 relativ zum Oberteil 9 ist ein Scharnier 12 mit einem durchgehenden Stift 13 vorgesehen, an dem jeweils gebogene Lappen des Ober- bzw. Unterteils 9 und 10 anliegen. Alternativ kann auch ein anderes Gelenk verwandt werden, um eine Verschwenkbarkeit des Oberteils 9 zu dem Unterteil 10 von mindestens 45 Grad, vorzugsweise 90 Grad, zu ermöglichen. Der Stift 13 bildet zugleich eine Schwenkachse 14, um die das Ober- und Unterteil 9 und 10 relativ zueinander verschwenkbar sind.

Zum Festlegen des Feststellelementes 8 bzw. des ersten Teils 1 an dem zweiten Teil 2 weist das Feststellelement 8 eine Schraube 15 mit einem durch eine Führungsbohrung 16 des Oberteils 9 geführten Schaft 17 auf, an dessen dem Unterteil 10 zugewandten freien Ende ein Kopf 18 und an dessen gegenüberliegenden freien Ende ein Endanschlag 19 ausgebildet sind. Hierdurch ist die Schraube 15 unverlierbar an dem Oberteil 9 angeordnet. Eine unter Vorspannung stehende Feder 20, die sich zwischen dem Kopf 18 der Schraube 15 und Anschlagflächen einer Ausnehmung 21 des Oberteils 9 längs der Schraube 15 erstreckt, bewirkt eine nach unten gerichtete Federkraft auf die Schraube 15.

Ferner weist das Feststellelement 8 eine Festlegmutter 22 auf, die sich in Schraubeingriff mit dem Schaft 17 befindet und sich zwischen einer Oberseite 23 des Oberteils 9 und dem Endanschlag 19 erstreckt. Befindet sich das Feststellelement 8 in einer Entriegelungsposition, erstreckt sich die langgestreckt ausgebildete Festlegmutter 22 in einer durch einen hohen ersten Anschlag 24 und einen niedrigen zweiten Anschlag 25 gebildeten unterbrochenen Nut 26. In dieser Position der Festlegmutter 22 ist das Befestigungselement 6 an dem zweiten Teil 2 anlegbar, wobei die Festlegmutter 22 innerhalb des Schlitzes 7 des zweiten Teils 2 positioniert ist. Dabei ist die Breite des Schlitzes 7 derart gewählt, daß der Endanschlag 19 sowie die an der Festlegmutter 22 anliegenden Anschläge 24 und 25 in den Schlitz 7 eingreifen können.

Die Anschläge 24 und 25 sind paarweise parallel zueinander angeordnet. Sie erstrecken sich versetzt zueinander und hintereinander unter Bildung einer Quernut 27, in der die Festlegmutter 22 in der Verriegelungsposition gehalten ist. Die Quernut 27 erstreckt sich quer zur Nut 26 und quer zum Befestigungselement 6.
In der Entriegelungsposition des Feststellelementes 8 liegen lange Seiten der parallelogrammförmigen Festlegmutter 22 an den inneren Längsseiten der ersten Anschläge 24 und bereichsweise mit den schmalen Seiten an aufrechten Schmalseiten der zweiten Anschläge 25.

Die Montage des ersten Teils 1 an dem zweiten Teil 2 wird im folgenden beschrieben. Nachdem das Befestigungselement 6 jeweils an den Schmalseiten des ersten Teils 1 fest mit demselben verbunden worden ist, wird das erste Teil 1 an einer ersten Schmalseite des zweiten Teils 2 an demselben befestigt. Zu diesem Zweck wird das Befestigungselement 6 unter flächiger Anlage der Oberseite 23 des Oberteils 9 an die Außenflächen des c-förmigen Profils 2 angelegt, wobei die Anschläge 24 und 25 sowie die Festlegmutter 22 in den Schlitz 7 des zweiten Teils 2 eingreifen. Durch Anheben der Schraube 15 unter Anlage des Kopfes 18 an einer unteren Schulter des Oberteils 9 entgegen der Kraft der Feder 22 und gleichzeitiges Verdrehen der Schraube 15 um etwa 60 Grad wird die Festlegmutter 22 in eine Teilverriegelungsposition verbracht, in der sie in der Quernut 27 gehalten ist. Durch Lösen der Betätigungskraft liegt die Festlegmutter 22 unter Anlage an einer Innenseite des c-förmigen Profilteils 2 an demselben an. Zum Angreifen eines Betätigungmittels, insbesondere eines Schraubendrehers, weist das Unterteil 10 eine Ausnehmung auf. Dadurch, daß sowohl der erste Anschlag 24 als auch der zweite Anschlag 25 eine solche Höhe aufweisen, die größer ist als die Dicke des c-förmigen Profils 2 und der Dicke der Festlegmutter 22, wird ein unerwünschtes Weiterdrehen bzw. Zurückverdrehen der Festlegmutter 22 infolge von Erschütterungen verhindert. Vorzugsweise weist der zweite Anschlag 25 eine solche Höhe auf, daß nach dem Verdrehen der Festlegmutter 22 aus der Entriegelungsposition in die Teilverriegelungsposition die Unterkante der Festlegmutter 22 einen geringeren Abstand zu der Oberseite 23 aufweist als die Oberkante des zweiten Anschlags 25. Dabei ist die Höhe des Anschlags 25 auf die Steigung der Schraube 15 abgestimmt, so daß nach Drehung der Schraube 15 in die Querstellung ( Teilverriegelungsposition) die Festlegmutter 22 unter die Oberkante des Anschlags 25 bewegt ist. Hierdurch wird auch bei Fehlen einer Feder 20 die Festlegmutter 22 sicher in der Teilverriegelungsposition gehalten.

Nachfolgend kann durch das Eigengewicht des ersten Teils 1 dasselbe zusammen mit dem Unterteil 10 um die Schwenkachse 14 in eine vertikale Position verschwenkt werden. Das Scharnier 12 bzw. die Schwenkachse 14 ist in einem randnahen Bereich des ersten Teils 1 angeordnet, so daß das erste Teil 1 auf einfache Weise selbsttätig in die senkrechte Position verbracht werden kann. Es kann nunmehr die Installation der an dem ersten Teil anzuschließenden Teile, wie Leseleuchte usw., vorgenommen werden. Dabei ist die Rückseite des ersten Teils 1 zugänglich.

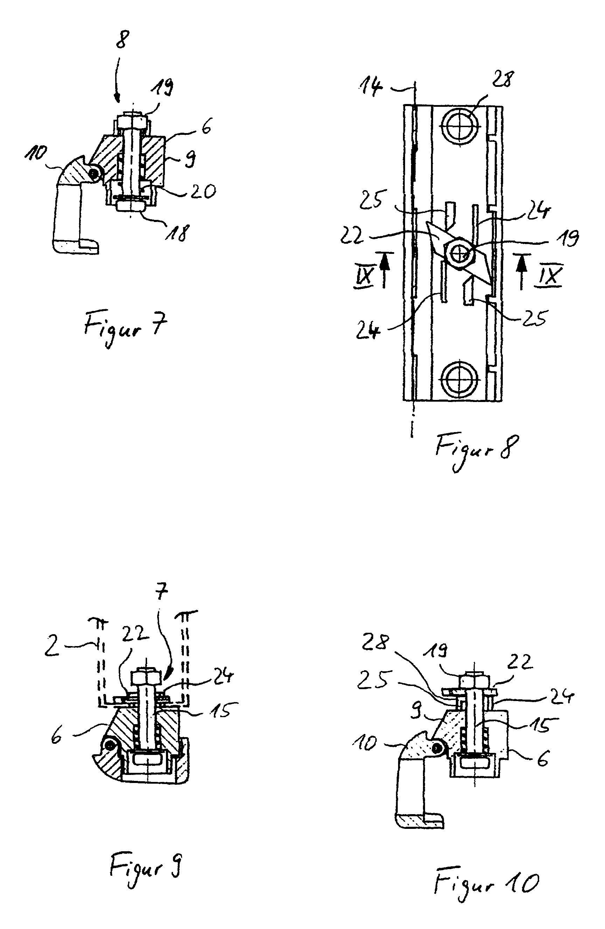

Im Bereich der Enden des langgestreckten Oberteils 9 sind jeweils zylinderförmige Führungsbolzen 28 vorgesehen, die von der Oberseite 23 abragen und als Führung für das Oberteil 9 in dem schienenförmig ausgebildeten Profilteil 2 dienen. Hierdurch können auf einfache Weise die hintereinander angeordneten zweiten Teile 2 entlang des Profilteils 1 verschoben und in die endgültige Position verbracht werden. In dieser Position wird die Festlegmutter 22 durch Weiterdrehen in der gleichen Richtung, im vorliegenden Fall eines Rechtsgewindes der Schraube 15 durch Rechtsdrehen, in die Verriegelungsposition verbracht, in der sowohl die Festlegmutter 22 an der Oberseite 23 als auch der Kopf 18 an der entsprechenden Schulter an der Ausnehmung 21 des Oberteils 9 anliegt, so daß das erste Teil 1 kraftschlüssig mit dem zweiten Teil 2 verbunden ist. Dabei bewirkt der erste Anschlag 24, wie beim Verbringen der Festlegmutter 22 in die Teilverriegelungsposition, daß die Festlegmutter 22 nicht weitergedreht wird. Zu diesem Zweck weist der erste Anschlag 24 eine solche Höhe auf, die größer ist als der um die Dicke der Festlegmutter 22 verminderte lichte Abstand des Endanschlags 19 zu der Oberseite 23 bei Vorliegen einer obersten Stellung der Schraube 15 gemäß Figur 10.

Nachdem das Befestigungselement 6 auf einer Seite des ersten Teils 1 endgültig festgelegt ist, kann nun der erste Teil 1 durch Verschwenken um die Schwenkachse 14 in eine horizontale Lage verbracht werden. An der gegenüberliegenden Schmalseite des ersten Teils 1 ist ein identischen nicht dargestelltes Befestigungselement 6 angeordnet. Unter Eingreifen der Festlegmutter 22 dieses Befestigungselements 6 in den entsprechenden Schlitz 7 des zweiten Profilteils 2 kann die gegenüberliegende Seite des ersten Teils 1 in entsprechender Weise kraftschlüssig mit dem korrespondierenden Profilteil 2 verbunden werden. Die Montage des ersten Teils 1 an dem zweiten Teil 2 ist nunmehr abgeschlossen.

Vorzugsweise ist die Breite des Schlitzes 7 etwas größer als der Außendurchmesser der Führungsbolzen 28. Hierdurch wird ein Spiel in Querrichtung des Befestigungselementes 6 in der Teilverriegelungsposition ermöglicht, so daß ein Verschieben des Befestigungselementes 6 auch bei versetzt zueinander angeordneten benachbarter schienenförmiger Profilteile 2 ermöglicht wird.

Dadurch, daß die Anschläge 24, 25 paarweise angeordnet sind, werden jeweils zwei Anschlagflächen oder -kanten gebildet, so daß die an den Angriffspunkten angreifenden Drehkräfte halbiert sind.

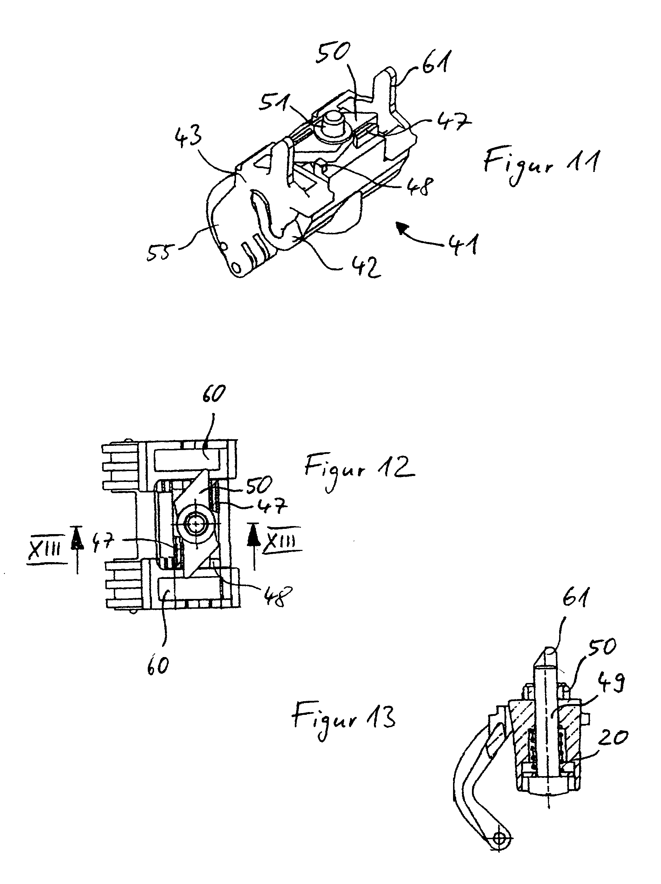

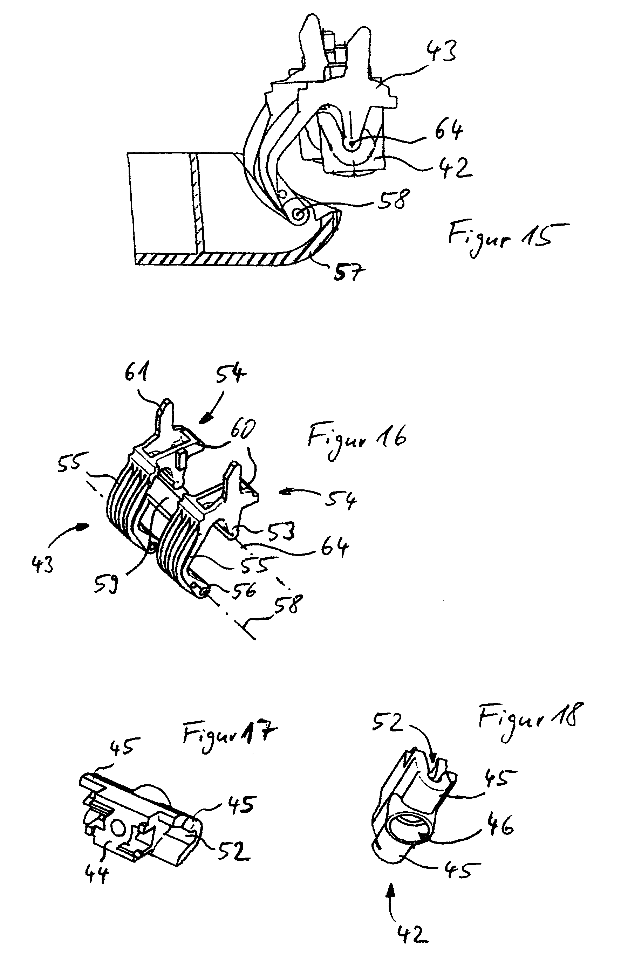

Im Unterschied zu dem vorhergehenden Ausführungsbeispiel besteht das Halteteil 41 nach einem zweiten Ausführungsbeispiel gemäß den Figuren 11 bis 18 aus zwei Teilen, nämlich aus einem Aufnahmeteil 42 und einem Einsetzteil 43. Das Aufnahmeteil 42 weist einen mittleren Abschnitt 44 und jeweils einen an demselben angrenzenden äußeren Abschnitt 45 auf. Der mittlere Abschnitt 44 weist in Übereinstimmung mit dem ersten Ausführungsbeispiel eine Führungsbohrung 46 sowie auf einer Oberseite zwei Paare von diametral zu der Führungsbohrung 46 gleich angeordneten Anschlägen 47 und 48 auf, die in gleicher Weise zur Verriegelung eines Feststellelementes dienen. Das Feststellelement ist übereinstimmend zum ersten Ausführungsbeispiel als eine Schraube 49 ausgebildet, die im Bereich des Schaftendes mit einer Festlegmutter 50 und einem Endanschlag 51 versehen ist.

Die äußeren Abschnitte 45 des Aufnahmeteils 42 weisen jeweils eine in axialer Richtung verlaufende muldenförmige Aufnahme 52 auf, in die ein wulstförmiger Fortsatz 53 des Einsetzteils 43 eingreifen kann. Das Einsetzteil 43 weist korrespondierend zu dem Aufnahmeteil 42 jeweils in einem äußeren Abschnitt 54 den wulstförmigen Fortsatz 53 sowie einen seitlich bogenförmig abragenden Haltearm 55 auf, an dessen freien Ende 56 Axialbohrungen vorgesehen sind zur Ausbildung eines scharnierartigen Gelenkes mit einem plattenförmigen ersten Teil 57. Das plattenförmige erste Teil 57 ist vorzugsweise als Funktionstafel ausgebildet, die im Deckenbereich eines Flugzeuges lösbar angebracht ist. Durch die Axialbohrungen verläuft eine Schwenkachse 58, um die die Funktionstafel 57 verschwenkbar zu dem Halteteil 41 gelagert ist.

Die äußeren Abschnitte 54 des Einsetzteils 43 sind in einem oberen Randbereich der Haltearme 55 mittels eines Verbindungssteges 59 miteinander verbunden. An einer Oberseite der wulstförmigen Fortsätze 53 schließt sich ein Basisteil 60 mit nach oben abragenden Führungsstiften 61 an. Das Basisteil 60 weist Rastmittel auf, derart, daß die Fortsätze 53 unverlierbar in der Aufnahme 52 des Aufnahmeteils 42 gelagert sind. Dabei ist der Öffnungswinkel der im Querschnitt keilförmigen Aufnahme 52 größer gewählt als die korrespondierende keilförmige Form des Fortsatzes 53, so daß das Einsetzteil 43 in dem Aufnahmeteil 42 mit Spiel in Querrichtung gehaltert ist. Dies ermöglicht eine spannungsfreie Arretierung der Funktionstafel 57 im Bereich gegenüberliegender Randseiten 62 derselben an einem jeweils als Profilschiene ausgebildeten zweiten Teil 63. Durch nicht dargestellte Rastelemente wird bewirkt, daß das Einsetzteil 43 nur unter Aufbringung einer vorgegebenen Kraft um eine Drehachse 64 bezüglich des Aufnahmeteils 42 verdreht werden kann. Der Verdrehwinkelbereich beträgt wenige Grad. Auch nach der Montage kann hierdurch ein Toleranzausgleich geschaffen werden.

Alternativ kann das Halteteil 41 auch einstückig ausgebildet sein. Die Zweistückigkeit bietet jedoch den Vorteil, daß bei nichtbestimmungsgemäßem Gebrauch der Schraube 49, die zu einer Zerstörung derselben führt, lediglich das Aufnahmeteil 42 ausgetauscht werden braucht. Das Einsetzteil 43 kann weiterhin mit der Funktionstafel 57 verbunden sein.

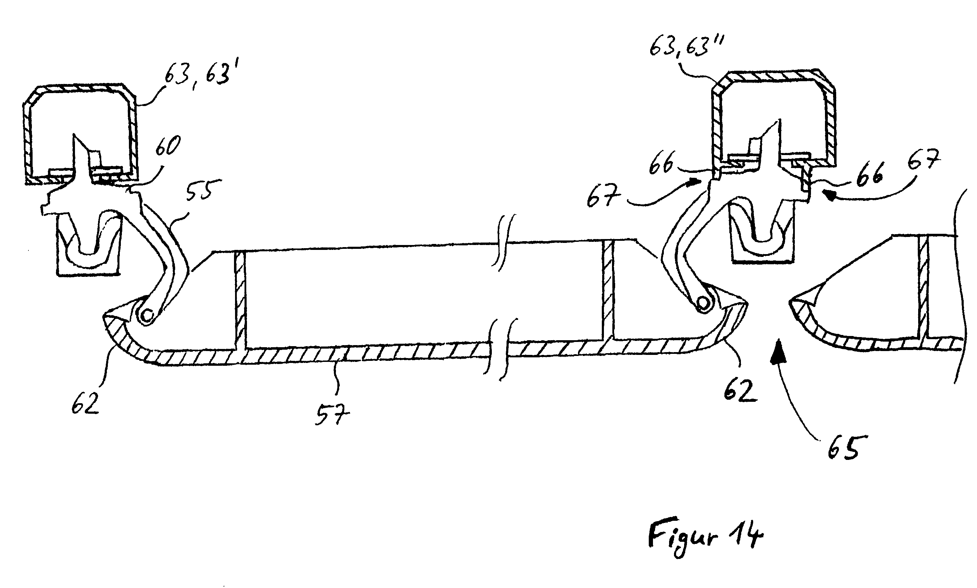

Wie besonders gut aus Figur 14 zu ersehen ist, ermöglicht der vom Basisteil 60 abragende Haltearm 55, daß die Funktionstafel 57 nach Lösen des Halteteils 41 an der Randseite 62 derselben aus einer zu den Profilschienen 63 parallelen Ebene in eine senkrechte Ebene verschwenkt werden kann. Dadurch, daß die Haltearme 55 auf einer solchen Seite des Basisteils 60 abragen, die der Erstreckung der Funktionstafel 57 zugewandt ist, kann ein zwischen benachbarten Funktionstafein 57 vorgesehener Spalt 65 dazu genutzt werden, mittels eines Betätigungselementes Zugang zu der Schraube 49 zu bekommen. Eine Durchgangsbohrung in der Funktionstafel 57 selbst kann dadurch vermieden werden.

Zur Ermöglichung eines Toleranzausgleiches in Querrichtung zur Schwenk- bzw. Drehachse 58, 64 sind die einer Funktionstafel 57 zugeordneten Profilschienen 63 unterschiedlich ausgebildet. Eine erste Profilschiene 63' ist im wesentlichen c-förmig ausgebildet und liegt in der Verriegelungsposition mit ihren freien Enden zwischen der Festlegmutter 50 und einer Oberseite des Aufnahmeteils bzw. Einsetzteils 42, 43. Eine der gegenüberliegenden Randseite 62 der Funktionstafel 57 zugeordnete Profilschiene 63" ist in gleicher Weise c-förmig ausgebildet, weist jedoch zusätzlich quer zu den Enden abragende Festlegstege 66 auf, die in randseitigen stufenförmigen Aufnahmen 67 des Basisteils 60 eingefaßt sind und eine relative Querbewegung zwischen dem Aufnahmeteil 42 und der Profilschiene 63" verhindern. Das Halteteil 41 ist daher an der Profilschiene 63' und an der Profilschiene 63" nach Art eines Los- bzw. Festlagers in Querrichtung befestigt, wobei aufgrund des Abstandes der freien Enden der Profilschiene 63' zueinander ein Toleranzausgleich von ca. +/- 2 mm geschaffen wird.

## Patentansprüche

1. Vorrichtung zum Befestigen eines ersten Teils (1,57) an einem feststehenden zweiten Teil (2), insbesondere an einem Teil eines Fahrzeugs, mit
- einem Befestigungselement (6), das mit dem ersten Teil (1,57) verbindbar ist und das mindestens ein unverlierbar angeordnetes Feststellelement (8) aufweist,
- wobei das Feststellelement (8) zum einen in eine das erste Teil (1,57) mit dem zweiten Teil (2) verbindende Verriegelungsposition und zum anderen in eine das erste Teil (1,57) vom zweiten Teil (2) lösende Entriegelungsposition bringbar ist, und
- wobei das Befestigungselement (6) mindestens ein das Feststellelement (8) tragendes Halteteil (9,10,41) aufweist, das um eine Schwenkachse (14,58) schwenkbar mit dem ersten Teil (1,57) gekoppelt ist,
**dadurch gekennzeichnet,**
- **dass** das Feststellelement (8) eine durch eine Führungsbohrung (16) des Halteteils (9,10,41) sich erstreckende Schraube (15,49) mit einem Kopf (18) und einem Schaft (17) aufweist, wobei dem freien Ende des Schaftes (17) ein Endanschlag (19,51) zugeordnet ist und wobei der Kopf (18) auf einer dem ersten Teil (1) zugekehrten Seite der Führungsbohrung (16,46) angeordnet ist,
- **dass** auf einer dem zweiten Teil (2) zugekehrten Seite der Führungsbohrung (16,46) eine Festlegmutter (22,51) auf dem Schaft (17) verdrehbar angeordnet ist, und
- **dass** auf einer dem zweiten Teil (2) zugewandten Oberseite (23) des Halteteils (9,10,41) mindestens zwei Anschläge (24,25,47,48) derart angeordnet sind, dass die Festlegmutter (22,51) selbsttätig durch Verdrehen der Schraube (15,49) in die Verriegelungsposition einerseits und in die Entriegelungsposition andererseits bringbar ist.

2. Vorrichtung nach Anspruch 1, **dadurch gekennzeichnet, dass** die Anschläge (24,25,47,48) jeweils langgestreckt ausgebildet sind und sich parallel zu der Schwenkachse (14) erstrecken.

3. Vorrichtung nach Anspruch 1 oder 2, **dadurch gekennzeichnet, dass** mindestens zwei Anschläge (24,25,47) beabstandet zueinander von der Oberseite (23) des Halteteils (9,10,41) abragen mit jeweils Anschlagkanten oder Anschlagflächen zur Anlage der Festlegmutter (22,51) bei Bewegung derselben in die Verriegelungsposition und/oder in die Entriegelungsposition.

4. Vorrichtung nach einem der Ansprüche 1 bis 3, **dadurch gekennzeichnet, dass** die Anschläge (24,25,47,48) eine unterschiedliche Höhe aufweisen, wobei ein bei Verdrehen der Festlegmutter (22,51) von der Entriegelungsposition in die Verriegelungsposition in Verdrehrichtung hinten angeordneter erster Anschlag (24,47) höher ausgebildet ist als ein in Verdrehrichtung vorne angeordneter zweiter Anschlag (25,48), und dass der erste Anschlag (24,47) eine solche Höhe aufweist, die größer ist als der um die Dicke der Festlegmutter (22,51) verminderte lichte Abstand des Endanschlages (19,51) zu der Oberseite (23) des Halteteils (9,10,41) in der oberen Endstellung der Schraube (15,49) unter Anlage des Kopfes (18) an der Unterseite des Halteteils (9,10,41).

5. Vorrichtung nach einem der Ansprüche 3 bis 4, **dadurch gekennzeichnet, dass** der zweite Anschlag (25,48) eine solche auf die Steigung der Schraube (15,49) abgestimmte Höhe aufweist, dass nach dem Verdrehen der Festlegmutter (22,51) aus der Entriegelungsposition in die Verriegelungsposition eine Unterkante der Festlegmutter (22,51) unter die Oberkante des zweiten Anschlags (25,48) bewegt ist.

6. Vorrichtung nach einem der Ansprüche 1 bis 5, **dadurch gekennzeichnet, dass** die Schraube (15,49) durch eine Feder (20) in eine untere Stellung vorgespannt ist und dass das Feststellelement (8) durch Bewegen der Schraube (15,49) entgegen der Kraftwirkung der Feder (20) von der Entriegelungsposition in die Verriegelungsposition bringbar ist.

7. Vorrichtung nach einem der Ansprüche 1 bis 6, **dadurch gekennzeichnet, dass** sich die Schwenkachse (14,58) im Bereich eines Randes (22) des ersten Teils (1) erstreckt.

8. Vorrichtung nach einem der Ansprüche 1 bis 7, **dadurch gekennzeichnet, dass** das Halteteil (9,10,41) über ein scharnierartiges Gelenk mit dem ersten Teil (1,57) gekoppelt ist.

9. Vorrichtung nach einem der Ansprüche 1 bis 8, **dadurch gekennzeichnet, dass** sich das Gelenk senkrecht zur Wirkungsebene des Feststellelementes (8) erstreckt.

10. Vorrichtung nach einem der Ansprüche 1 bis 9, **dadurch gekennzeichnet, dass** das Halteteil als ein dem zweiten Teil (2) zugewandtes Oberteil (9) ausgebildet ist, das um die Schwenkachse (14) schwenkbar zu einem dem ersten Teil (1) zugewandten Unterteil (10) ausgebildet ist, und dass das Unterteil (10) Bestandteil des ersten Teils (1) oder lösbar mit dem ersten Teil (1) verbunden ist.

11. Vorrichtung nach einem der Ansprüche 1 bis 10, **dadurch gekennzeichnet, dass** sich die Schwenkachse (14) entlang eines Randes des Unterteils (10) erstreckt und dass sich quer zur Schwenkachse (14) an den Rand des Unterteils (10) eine Durchgangsbohrung anschließt zur Aufnahme der Schraube (15).

12. Vorrichtung nach einem der Ansprüche 1 bis 11, **dadurch gekennzeichnet, dass** das Halteteil quaderförmig ausgebildet ist, wobei das Unterteil (10) in einer Aufnahme (11) des ersten Teils (1) eingefasst ist.

13. Vorrichtung nach einem der Ansprüche 1 bis 9, **dadurch gekennzeichnet, dass** von dem Halteteil (41) in Richtung einer angelenkten Randseite (22) des ersten Teils (57) ein Haltearm (55) abragt, wobei das Gelenk an einem freien Ende (56) des Haltearms (55) angeordnet ist.

14. Vorrichtung nach Anspruch 13, **dadurch gekennzeichnet, dass** sich der Haltearm (55) auf einer der angelenkten Randseite (22) des ersten Teils (57) zugewandten Seite des Halteteils (41) im wesentlichen parallel zu der Schraube (49) erstreckt, wobei das freie Ende (56) des Haltearms (55) in einem vorgegebenen axialen und radialen Abstand zu der Schraube (49) angeordnet ist.

15. Vorrichtung nach Anspruch 13 oder 14, **dadurch gekennzeichnet, dass** mindestens zwei in Axialrichtung versetzt zueinander verlaufende Haltearme (55) vorgesehen sind, die jeweils bogenförmig ausgebildet sind.

16. Vorrichtung nach einem der Ansprüche 13 bis 15, **dadurch gekennzeichnet, dass** die Haltearme (55) in einem zu einem die Führungsbohrung (35) aufweisenden mittleren Abschnitt (44) benachbarten äußeren Abschnitt (54) des Halteteils (41) von demselben abragen.

17. Vorrichtung nach einem der Ansprüche 13 bis 16, **dadurch gekennzeichnet, dass** das Halteteil (41) zweistückig ausgebildet ist mit einem die Führungsbohrung (46) aufweisenden Aufnahmeteil (42), das rastend mit einem die Haltearme (55) aufweisenden Einsetzteil (43) verbunden ist.

18. Vorrichtung nach einem der Ansprüche 13 bis 17, **dadurch gekennzeichnet, dass** das Aufnahmeteil (42) in einem mittleren Abschnitt (44) die Anschläge (47,48) und in einem benachbarten äußeren Abschnitt (45) eine muldenförmige Aufnahme (52) aufweist, in der das Einsetzteil (43) mit einem wulstförmigen Fortsatz (53) mit Spiel in Querrichtung eingefasst ist.

19. Vorrichtung nach einem der Ansprüche 13 bis 18, **dadurch gekennzeichnet, dass** das erste Teil (57) plattenförmig ausgebildet ist, wobei es an gegenüberliegenden Randseiten (62) mit den entsprechenden Haltearmen (55) der Einsetzteile (43) gelenkig verbunden ist, und **dass** das Aufnahmeteil (42) an den als Profilschiene (63,63',63") ausgebildeten zweiten Teil befestigt ist, wobei das Aufnahmeteil (42) fluchtend zu einem zwischen den Randseiten (62) benachbarter erster Teile (57) ausgebildeten Spalt (65) angeordnet ist.

20. Vorrichtung nach einem der Ansprüche 13 bis 19, **dadurch gekennzeichnet, dass** die einer über das Halteteil (41) verbundene ersten Randseite (22) des ersten Teils (57) zugeordnete Profilschiene (63') c-förmig ausgebildet ist und dass die über das Halteteil (41) verbundene gegenüberliegende Randseite (22) desselben ersten Teils (57) zugeordnete Profilschiene (63") c-förmig unter Bildung mindestens eines abragenden Festlegsteges (66) ausgebildet ist, wobei der Festlegsteg (66) in eine Aufnahme des Halteteils (41) eingreift zur starren Halterung des Halteteils (41) an der Profilschiene (63") in Querrichtung.

## Claims

1. Device for fastening a first part (1, 57) to a stationary second part (2), in particular to a part of a vehicle, with
- a fastening element (6) which can be connected to the first part (1, 57) and has at least one locking element (8) arranged so it cannot be lost,
- wherein the locking element (8) can be brought into a locked position joining the first part (1, 57) to the second part (2) and can also be brought into an unlocked position releasing the first part (1, 57) from the second part (2),
- said fastening element (6) having at least one mounting part (9, 10, 41) which supports the locking element (8) and is connected to the first part (1, 57) in such a way that it can pivot about a pivot axis (14, 58),
**characterized in that**
- the locking element (8) has a screw (15, 49) extending through a guide bore (16) in the mounting part (9, 10, 41) with a head (18) and a shaft (17), where an end stop (19, 51) is provided for the free end of the shaft (17) and where the head (18) is arranged on a side of the guide bore (16, 46) facing the first part (1);
- a lock nut (22, 51) is arranged on the shaft (17) so it can be turned on a side of the guide bore (18, 48) facing the second part (2), and
- at least two stops (24, 25, 47, 48) are arranged on a top side (23) of the mounting part (9, 10,41) facing the second part (2) so that the lock nut (22, 51) can be brought automatically into the locked position by turning the screw (15, 49) and can also be brought into the unlocked position.

2. Device according to claim 1, **characterized in that** the stops (24, 25, 47,48) are elongated in design and extend parallel to the pivot axis (14).

3. Device according to claim 1 or 2, **characterized in that** at least two stops (24, 25, 47) project with a distance between them away from the top side (23) of the mounting part (9, 10, 41) with stop edges or stop faces for coming in contact with the lock nut (22,51) with the movement thereof into the locked position and/or into the unlocked position.

4. Device according to one of claims 1 through 3, **characterized in that** the stops (24, 25, 47, 48) have different heights, with a first stop (24, 47) which is arranged at the rear in the direction of turning when the lock nut (22,47) is turned from the unlocked position into the locked position being designed to be higher than a second stop (25, 48) arranged at the front in the direction of turning, and the first stop (24, 47) has a greater height than the inside distance of the end stop (19, 51) from the top side (23) of the mounting part (9, 10,41) minus the thickness of the lock nut (22, 51) in the upper end position of the screw (15, 49) with the head (18) in contact with the underside of the mounting part (9, 10, 41).

5. Device according to one of claims 3 through 4, **characterized in that** the second stop (25, 48) has a height matched to the pitch of the screw (15,48) such that after turning the lock nut (22,51) out of the unlocked position into the locked position, a lower edge of the lock nut (22, 51) is moved beneath the upper edge of the second stop (25, 48).

6. Device according to one of claims 1 through 5, **characterized in that** the screw (15, 49) is under an initial tension due to a spring (20) pushing it into a lower position, and the locking element (8) can be brought from the unlocked position into the locked position by moving the screw (15, 49) against the force of the spring (20).

7. Device according to one of claims 1 through 7, **characterized in that** the pivot axis (14, 58) extends in the area of a first edge (22) of the first part (1).

8. Device according to one of claims 1 through 7, **characterized in that** the mounting part (9, 10, 41) is connected by a hinge-like joint to the first part (1, 57).

9. Device according to one of claims 1 through 8, **characterized in that** the joint extends perpendicular to the plane of action of the locking element (8).

10. Device according to one of claims 1 through 9, **characterized in that** the mounting part is designed as a top part (9) facing the second part(2), designed to pivot about the pivot axis (14) to a bottom part (10) facing the first part (1), and the bottom part (10) is part of the first part (1) or is detachably connected to the first part (1).

11. Device according to one of claims 1 through 10, **characterized in that** the pivot axis (14) extends along an edge of the bottom part (10) and a through hole connects with the edge of the bottom part (10) across the pivot axis (14) to accommodate the screw (15).

12. Device according to one of claims 1 through 11, **characterized in that** the mounting part is cube shaped, with the bottom part (10) being held in a receptacle (11) in the first part(1).

13. Device according to one of claims 1 through 9, **characterized in that** a mounting arm (55) projects away from the mounting part (41) in the direction of a hinge-connected edge side (22) of the first part (57), where the joint is arranged on a free end (56) of the mounting-arm (55).

14. Device according to claim 13, **characterized in that** the mounting arm (55) extends essentially parallel to the screw (49) on a side of the mounting part (41) facing the hinge connected edge side (22) of the first part (57), where the free end (58) of the mounting arm (55) is arranged at a predetermined axial and radial distance from the screw (49).

15. Device according to claim 13 or 14, **characterized in that** at least two mounting arms (55) running axially with an offset are provided, each having a curved design.

16. Device according to one of claims 13 through 15, **characterized in that** the mounting arms (55) project away from the mounting part (41) in an outer section (54) thereof adjacent to a central section (44) having the guide bore (48).

17. Device according to one of claims 13 through 16, **characterized in that** the mounting part (41) is designed in two parts with a receptacle part (42) which has the guide bore (48) and is snap connected to an insertion part (43) having the mounting arms (55).

18. Device according to one of claims 13 through 17, **characterized in that** the receptacle part (42) has stops (47, 48) in a central section (44) and in an adjacent outer section (45) having a trough-shaped receptacle (52) in which the insertion part (43) is engaged with a bead projection (53) with some play in the transverse direction.

19. Device according to one of claims 13 through 18, **characterized in that** the first part (57) is designed as a plate connected in an articulated manner to the corresponding mounting arms (55) of the insertion parts (43), and the receptacle part (42) is arranged in alignment with a gap formed between the edge sides of adjacent first parts (57).

20. Device according to one of claims 13 through 19, **characterized in that** profile rail (63") provided for a first edge side (22) of the first part (57) connected by the mounting part (41) is designed to be c-shaped, and the profile rail (63") provided for the opposite edge side (22) of the same first part (57) connected by the mounting part (41) is designed to be c-shaped, forming at least one projecting locking web (66), where the locking web (66) engages in a receptacle of the mounting part (41) to rigidly mount the mounting part (41) on the profile rail (63") in the transverse direction.

## Revendications

1. Dispositif permettant de fixer une première pièce (1, 57) à une deuxième pièce fixe (2), en particulier sur une pièce d'un véhicule, comportant
- un élément de fixation (6) susceptible d'être relié à la première pièce (1, 57) et comprenant au moins un élément d'immobilisation (8) agencé de façon imperdable,
- dans lequel l'élément d'immobilisation (8) est susceptible d'être amené d'une part dans une position de verrouillage reliant la première pièce (1, 57) à la deuxième pièce (2), et d'autre part dans une position de déverrouillage détachant la première pièce (1, 57) de la deuxième pièce (2), et
- dans lequel l'élément de fixation (6) comprend au moins un élément de maintien (9, 10, 41) qui porte l'élément d'immobilisation (8) et qui est accouplé à la première pièce (1, 57) de façon mobile en pivotement autour d'un axe de pivotement (14, 58),
**caractérisé en ce que**
- l'élément d'immobilisation (8) comprend une vis (15, 49) qui traverse un perçage de guidage (16) de l'élément de maintien (9, 10, 41) et qui présente une tête (18) et une tige (17), une butée d'extrémité (19, 51) étant associée à l'extrémité libre de la tige (17), et la tête (18) étant agencée sur un côté, tourné vers la première pièce (1), du perçage de guidage (16, 46),
- un écrou d'immobilisation (22, 51) est agencé mobile en rotation sur la tige (17) sur un côté, tourné vers la deuxième pièce (2), du perçage de guidage (16, 46), et
- au moins deux butées (24, 25, 47, 48) sont agencées sur une face supérieure (23), tournée vers la deuxième pièce (2), de l'élément de maintien (9, 10, 41) de telle sorte que l'écrou d'immobilisation (22, 51) est susceptible d'être amené automatiquement par rotation de la vis (15, 49) d'une part jusque dans la position de verrouillage et d'autre part jusque dans la position de déverrouillage.

2. Dispositif selon la revendication 1, **caractérisé en ce que** les butées (24, 25, 47, 48) sont réalisées chacune sous forme allongée et s'étendent parallèlement à l'axe de pivotement (14).

3. Dispositif selon l'une ou l'autre des revendications 1 et 2, **caractérisé en ce qu'**au moins deux butées (24, 25, 47) font saillie à distance l'une de l'autre de la face supérieure (23) de l'élément de maintien (9, 10, 41), comportant des arêtes de butée et des surfaces de butée pour l'appui de l'écrou d'immobilisation (22, 51) lors d'un mouvement de celui-ci jusque dans la position de verrouillage et/ou jusque dans la position de déverrouillage.

4. Dispositif selon l'une des revendications 1 à 3, **caractérisé en ce que** les butées (24, 25, 47, 48) présentent des hauteurs différentes, une première butée (24, 47) agencée en arrière en direction de rotation lors d'une rotation de l'écrou d'immobilisation (22, 51) depuis la position de déverrouillage jusque dans la position de verrouillage étant réalisée plus haute qu'une deuxième butée (25, 48) agencée en avant en direction de rotation, et **en ce que** la première butée (24, 47) présente une hauteur supérieure à la distance libre, réduite de l'épaisseur de l'écrou d'immobilisation (22, 51), entre la butée d'extrémité (19, 51) et la face supérieure (23) de l'élément de maintien (9, 10, 41) dans la position finale supérieure de la vis (15, 49) avec application de la tête (18) contre la face inférieure de l'élément de maintien (9, 10, 41).

5. Dispositif selon l'une des revendications 3 et 4, **caractérisé en ce que** la deuxième butée (25, 48) présente une hauteur adaptée au pas de la vis (15, 49), de telle sorte qu'après rotation de l'écrou d'immobilisation (22, 51) hors de la position de déverrouillage jusque dans la position de verrouillage, une arête inférieure de l'écrou d'immobilisation (22, 51) est déplacée jusqu'au-dessous de l'arête supérieure de la deuxième butée (25, 48).

6. Dispositif selon l'une des revendications 1 à 5, **caractérisé en ce que** la vis (15, 49) est précontrainte dans une position inférieure par un ressort (20), et **en ce que** l'élément d'immobilisation (8) est susceptible d'être amené depuis la position de déverrouillage jusque dans la position de verrouillage par déplacement de la vis (15, 49) à l'encontre de l'effort du ressort (20).

7. Dispositif selon l'une des revendications 1 à 6, **caractérisé en ce que** l'axe de pivotement (14, 58) s'étend dans la zone d'un bord (22) de la première pièce (1).

8. Dispositif selon l'une des revendications 1 à 7, **caractérisé en ce que** l'élément de maintien (9, 10, 41) est accouplé à la première pièce (1, 57) via une articulation formant charnière.

9. Dispositif selon l'une des revendications 1 à 8, **caractérisé en ce que** l'articulation s'étend perpendiculairement au plan d'action de l'élément d'immobilisation (8).

10. Dispositif selon l'une des revendications 1 à 9, **caractérisé en ce que** l'élément de maintien est réalisé sous la forme d'une partie supérieure (9) tournée vers la deuxième pièce (2), partie supérieure qui est réalisée avec faculté de pivotement autour de l'axe de pivotement (14) par rapport à une partie inférieure (10) tournée vers la première pièce (1), et **en ce que** la partie inférieure (10) fait partie de la première pièce (1) ou est reliée de façon détachable à la première pièce (1).

11. Dispositif selon l'une des revendications 1 à 10, **caractérisé en ce que** l'axe de pivotement (14) s'étend le long d'un bord de la partie inférieure (10), et **en ce qu'**un perçage traversant destiné à recevoir la vis (15) se raccorde au bord de la partie inférieure (10) transversalement à l'axe de pivotement (14).

12. Dispositif selon l'une des revendications 1 à 11, **caractérisé en ce que** l'élément de maintien est réalisé en forme de parallélépipède, la partie inférieure (10) étant enchâssée dans un logement (11) de la première pièce (1).

13. Dispositif selon l'une des revendications 1 à 9, **caractérisé en ce qu'**un bras de maintien (55) fait saillie de l'élément de maintien (41) en direction d'un côté de bord articulé (22) de la première pièce (57), l'articulation étant agencée à une extrémité libre (56) du bras de maintien (55).

14. Dispositif selon la revendication 13, **caractérisé en ce que** le bras de maintien (55) s'étend sensiblement parallèlement à la vis (49) sur un côté de l'élément de maintien (41), côté qui est tourné vers le côté de bord articulé (22) de la première pièce (57), l'extrémité libre (56) du bras de maintien (55) étant agencée à une distance axiale et radiale prédéterminée par rapport à la vis (49).

15. Dispositif selon l'une ou l'autre des revendications 13 et 14, **caractérisé en ce qu'**il est prévu au moins deux bras de maintien (55) s'étendant en décalage mutuel en direction axiale et réalisés chacun sous forme arquée.

16. Dispositif selon l'une des revendications 13 à 15, **caractérisé en ce que** les bras de maintien (55) font saillie d'un tronçon extérieur (54) de l'élément de maintien (41), tronçon qui est voisin d'un tronçon médian (44) présentant le perçage de guidage (35).

17. Dispositif selon l'une des revendications 13 à 16, **caractérisé en ce que** l'élément de maintien (41) est réalisé en deux pièces, comportant une partie de réception (42) présentant le perçage de guidage (46) et reliée par enclenchement avec une partie de mise en place (43) comprenant les bras de maintien (55).

18. Dispositif selon l'une des revendications 13 à 17, **caractérisé en ce que** la partie de réception (42) comprend dans un tronçon médian (44) les butées (47, 48) et dans un tronçon extérieur voisin (45) un logement (52) en forme de creux dans lequel la partie de mise en place (43) est enchâssée par un prolongement (53) en forme de bourrelet avec jeu en direction transversale.

19. Dispositif selon l'une des revendications 13 à 18, **caractérisé en ce que** la première pièce (57) est réalisée en forme de plaque, laquelle est reliée par des côtés de bord opposés (62) avec articulation aux bras de maintien correspondants (55) des parties de mise en place (43), et **en ce que** la partie de réception (42) est fixée sur la deuxième pièce réalisée sous forme de rail profilé (63, 63', 63"), la partie de réception (42) étant agencée en alignement par rapport à un intervalle (65) réalisé entre les côtés de bord (62) de premières pièces voisines (57).

20. Dispositif selon l'une des revendications 13 à 19, **caractérisé en ce que** le rail profilé (63') associé à un premier côté de bord (22), relié via l'élément de maintien (41), de la première pièce (57) est réalisé en forme de C, et **en ce que** le rail profilé (63") associé au côté de bord opposé (22), relié via l'élément de maintien (41), de la même première pièce (57) est réalisé en forme de C en formant au moins une barrette d'immobilisation (66) en saillie, la barrette d'immobilisation (66) s'engageant dans un logement de l'élément de maintien (41) pour le maintien rigide en direction transversale de l'élément de maintien (41) sur le rail profilé (63").
